# EUROPEAN PATENT SPECIFICATION

(11) **EP 0 743 461 B1**
(45) Date of publication and mention of the grant of the patent: **12.07.2000**
(21) Application number: 96302743.8
(22) Date of filing: 19.04.1996
(51) Int. Cl.: F16B 5/06

(54) **Mounting device**
Montagevorrichtung
Dispositif de montage

(30) Priority: 19.05.1995 GB 9510144
(43) Date of publication of application: 20.11.1996
(73) Proprietor: Elta Plastics Ltd., Stockton-on-Tees, Cleveland TS18 3RX (GB)
(72) Inventor: Chapman, Paul Nicholas, Great Ayton, Cleveland TS9 6HA (GB)
(74) Representative: Virr, Dennis Austin

(56) References cited:
- EP-A- 0 018 851
- EP-A- 0 248 591
- DE-A- 3 245 056

## Description

The present invention is concerned with the problem of mounting a bracket, fitting or other item upon a wall, panel or other surface without having ready access to the rear of the latter surface. The invention is a device which has been devised with a view to overcoming that problem.

The problem, and the solution to it, are well illustrated by reference to such a situation in the motor car industry. In the assembling of cars, it is frequently desired to mount an interior fitting, for example a grab handle, upon the inside face of a body panel after the body shell has been assembled. At this point, it may be difficult or even impossible to gain access to the rear surface of the panel, with the object of securing the fitting in place from the rear of the panel. The alternative, of mounting the fitting before the panel is assembled into place, is clearly impractical.

The possibility arises of devising some form of clip, which could be installed via the exposed front surface of the panel and would include an attachment for the item to be mounted by it. However, available clips which might otherwise be suitable for the purpose would not allow subsequent ready removal of the item after it had been mounted. Furthermore, the manner in which the item would thus be mounted would not afford adequate strength.

A method which has been adopted for solving this problem has been to provide a nut, welded into position on the rear of the body panel behind the mounting aperture before the panel is installed, to which nut the fitting is subsequently bolted. However this additional step of welding a nut in place for each such fitting is an undesirable and inconvenient extra step in the production procedure. In addition, the method is unsuitable for retrofitting a component to meet the requirement of an individual owner.

An alternative solution which has been proposed is to provide a clip, for installation through the mounting aperture in the body panel, to which clip again the fitting is subsequently secured by means of a bolt. While this proposal goes some way towards solving the problem, it is still necessary to provide a bolt and to carry out the operation of screwing the bolt into position. A further feature of this approach is that either the bolt head remains visible, which may be aesthetically undesirable, or the fitting must be designed to cover the bolt head.

A device having the features of the pre-characterising part of claim 1 is disclosed in EP-A-0 248 591.

It is therefore an object of the present invention to provide an improved mounting device whereby at least some of the disadvantages of prior proposed such fittings are reduced or eliminated.

The mounting device according to the present invention comprises a clip made of a resilient material and a mounting bracket to which another item may be secured, which clip has an aperture therein to receive a projection from a body portion of said mounting bracket and further has, rearwardly of that aperture, a first section resiliently urged towards said projection and adapted to engage it, and a second section resiliently urged outwardly with respect to said projection and adapted to engage the rear of any surface upon which the clip may be mounted, which body portion and projection have a bore or aperture therethrough communicating with apertures in the sides of the projection to permit disengagement of the bracket.

The device is used by forming a hole in the surface, for example a panel, upon which the item is to be mounted and locating the device in the hole with the two resilient sections disposed rearwardly of the surface and with the second section abutting the rear of the surface. The projection from the mounting bracket is inserted through the aperture in the clip, either before or after the clip is located in the hole in the surface, and is held in place by the first resilient section.

The clip of the invention is made of resilient material. The preferred material is a spring steel, which may be a stainless steel depending upon the specific circumstances of its intended use.

It is particularly preferred that the clip be generally symmetrical in transverse section, in order to hold securely the item to be mounted and to balance the load upon the device and adjacent surface. Thus it is preferred to provide two said first resilient sections and/or two said second resilient sections, disposed in each case symmetrically about the aperture in the clip.

The mounting bracket has a projection therefrom adapted for location within the aperture in the device and the projection has a bore or aperture through it by which a tool, for example a screwdriver, may be inserted to urge the first resilient section(s) outwardly so as to disengage the bracket and permit its withdrawal.

The invention will now be further described, by way of example only, with reference to the accompanying drawings, which illustrate one preferred form of the device according to the present invention wherein:-
Fig. 1 is an exploded perspective view showing the clip and the mounting bracket;
Fig.2 is a cross-sectional view of the clip and mounting bracket installed for use; and
Fig.3 is a view corresponding to that of Fig.2, illustrating how the bracket may be removed by using a screwdriver.

The illustrated device includes a clip 10, made in a single piece from spring steel. The clip is rectangular in plan view and has a generally rectangular aperture 11 in its upper surface. A pair of resilient "wings" 12 depend downwardly from the body of the clip on opposite sides of the aperture 11. Each wing 12 is generally U-shaped in cross-section and comprises a first section 13 resiliently urged towards the opposite wing and, extending upwardly from the lower edge of the section 13, a second section 14 resiliently urged outwardly away from the opposite wing.

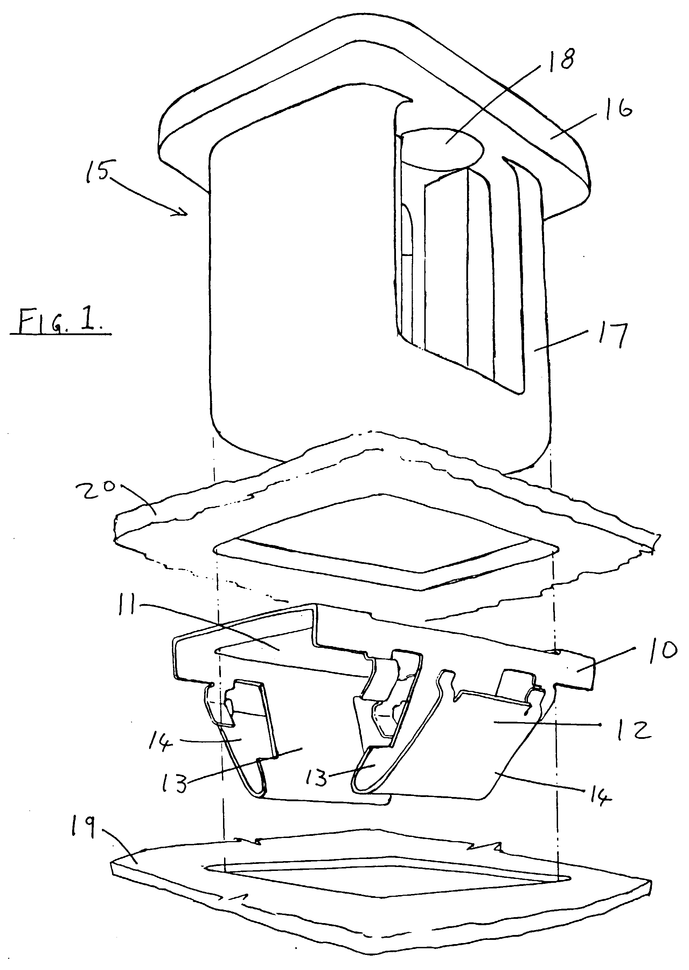

The mounting bracket 15 (of which only the lower half is shown in Fig.1) includes a flat base 16, from which a projection 17 extends downwardly, and has an axial bore 18 extending through it.

The device is shown in use for mounting the bracket 15 upon a car body panel 19 covered by a panel 20 of trim. As shown, the clip 10 is held in place by the wing sections 14 abutting the rear surface of the panel 19. The wing sections 13 project inwardly into apertures in the sides of the projection 17 and retain the bracket 15 against withdrawal from the clip.

There are two alternative preferred sequences for installing the clip and bracket in the illustrated positions. In the first sequence, the bracket 15 is first inserted through the trim panel 20 and the clip is then mounted upon the bracket to secure the latter to the trim panel. The assembly comprising bracket, trim panel and clip is then clipped to the body panel 19. In the alternative sequence, the clip is inserted in the body panel 19 as the first step and then the bracket is inserted through the trim panel 20 into the clip 10.

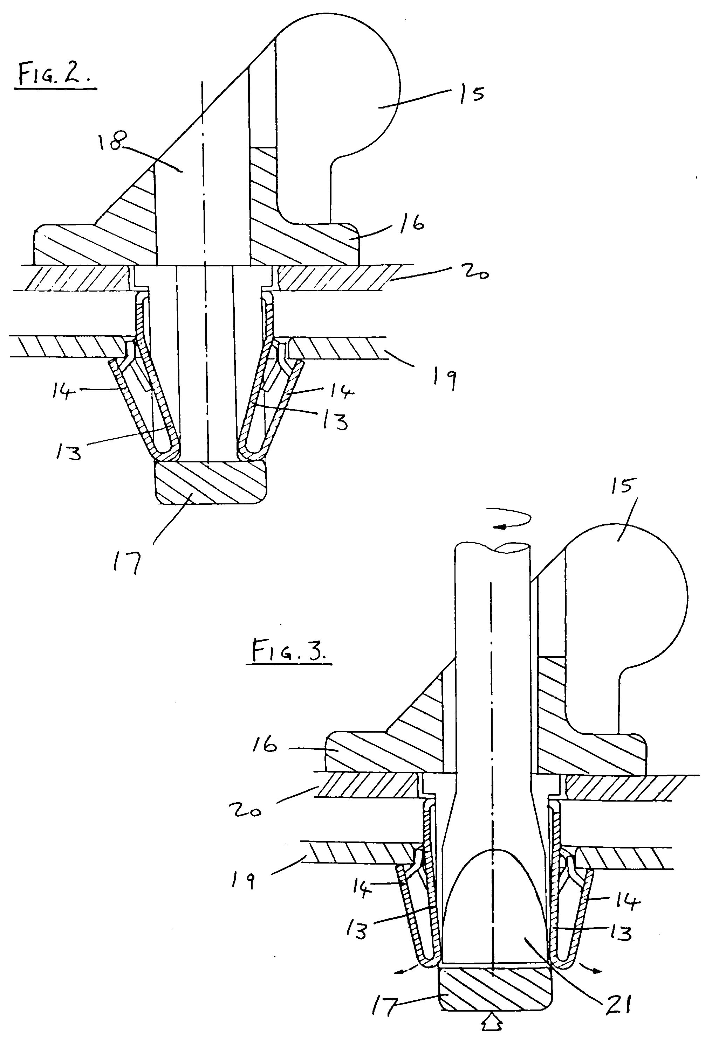

Fig.3 shows how the bracket 15 may be removed from the clip at any time after its installation. A screwdriver blade 21 is inserted into the axial bore 18 of the bracket 15 and turned about its axis by 90 degrees. In this way the wings 12 are moved apart and the wing sections 13 disengage from the projection 17 and allow the bracket to be withdrawn.

From the foregoing description, it can be seen that the device according to the invention allows the ready installation and subsequent removal of the mounting bracket upon a surface such as the panel 19.

## Claims

1. A mounting device comprising a clip (10) made of a resilient material and a mounting bracket (15) to which another item may be secured, characterised in that the clip (10) has an aperture (11) therein to receive a projection (17) from a body portion of said mounting bracket and further has, rearwardly of that aperture, a first section (13) resiliently urged towards said projection and adapted to engage it, and a second section (14) resiliently urged outwardly with respect to said projection (17) and adapted to engage the rear of any surface (19) upon which the clip may be mounted, and characterised further in that said body portion and projection (17) have a bore or aperture (18) therethrough communicating with apertures in the sides of the projection to permit disengagement of the bracket.

2. A mounting device according to Claim 1, characterised in that the resilient material is a spring steel.

3. A mounting device according to either of the preceding claims, characterised in that the clip is generally symmetrical in transverse section.

4. A mounting device according to Claim 3, characterised in that the clip comprises two said first resilient sections (13) and/or two said second resilient sections (14), disposed in each case symmetrically about said first-mentioned aperture (11) in the clip.

## Patentansprüche

1. Befestigungsvorrichtung mit einem Halter (10), aus einem federnden Material und einem Befestigungsträger (15), an welchem ein anderer Gegenstand aufgenommen werden kann und der Halter (10) eine Öffnung (11) enthält, die einen Vorsprung (17) des Grundkörpers des Befestigungsträgers (15) aufnimmt und weiterhin am rückwärtigem Teil der Öffnung einen ersten Abschnitt (13) aufweist, der federnd gegen den Vorsprung (17) angestellt ist und an diesem anliegend ausgebildet ist, und einen zweiten Abschnitt (14) enthält, der in Bezug auf den Vorsprung (17) außen federnd angeordnet ist und ausgebildet ist, die Rückseite einer jeden Oberfläche (19) zu ergreifen, an der der Halter (10) aufgenommen ist, dadurch gekennzeichnet, daß der Grundkörper und der Vorsprung (17) durchgängige Bohrungen oder Öffnungen (18) enthalten, die mit Öffnungen in den Seitenflächen des Vorsprungs in Verbindung stehen, um die Freigabe durch den Befestigungsträger (15) zu ermöglichen.

2. Befestigungsvorrichtung nach Anspruch 1, dadurch gekennzeichnet, daß das federnde Material Federstahl ist.

3. Befestigungsvorrichtung nach einem oder mehreren der vorhergehenden Ansprüche, dadurch gekennzeichnet, daß der Halter (10) in Querrichtung im wesentlichen symmetrisch ist.

4. Befestigungsvorrichtung nach Anspruch 1, dadurch gekennzeichnet, daß der Halter (10) zwei erste federnde Abschnitte (13) und/oder zwei zweite federnde Abschnitte (14) enthält, die in jedem Falle symmetrisch zur erstgenannten Öffnung (11) im Halter (10) angeordnet sind.

## Revendications

1. Dispositif de montage comprenant une pince (10) en matière élastique et une agrafe de montage (15) à laquelle un autre article peut être fixé, caractérisé en ce que la pince (10) présente une ouverture (11) qui y est ménagée pour recevoir une saillie (17) issue d'une partie de corps de l'agrafe de montage et comporte en outre, en arrière de cette ouverture, une première section (13), repoussée élastiquement vers la saillie et adaptée pour venir en prise avec celle-ci, et une seconde section (14) repoussée élastiquement vers l'extérieur par rapport à la saillie (17) et adaptée pour venir en prise avec l'arrière de toute surface (19) sur laquelle la pince peut être montée, et caractérisé en outre en ce que la partie de corps et la saillie (17) présentent un trou ou ouverture (18) qui les traverse et communique avec des ouvertures ménagées dans les côtés de la saillie afin de permettre une mise hors de prise de l'agrafe.

2. Dispositif de montage suivant la revendication 1, caractérisé en ce que la matière élastique est un acier à ressort.

3. Dispositif de montage suivant l'une ou l'autre des revendications précédentes, caractérisé en ce que la pince est dans l'ensemble symétrique en section transversale.

4. Dispositif de montage suivant la revendication 3, caractérisé en ce que la pince comporte deux desdites premières sections élastiques (13) et/ou deux desdites secondes sections élastiques (14), disposées dans chaque cas d'une manière symétrique autour de la première ouverture mentionnée (11) ménagée dans la pince.
